# EUROPÄISCHE PATENTSCHRIFT

(11) **EP 3 451 346 B1**
(45) Veröffentlichungstag und Bekanntmachung des Hinweises auf die Patenterteilung: **18.03.2020**
(21) Anmeldenummer: 18000678.5
(22) Anmeldetag: 16.08.2018
(51) Int. Cl.: G21C 15/18, G21C 15/243, G21D 1/04

(54) **SICHERHEITSBEHÄLTERKÜHLSYSTEM**
CONTAINMENT COOLING SYSTEM
SYSTÈME DE REFROIDISSEMENT D'UNE ENCEINTE DE CONFINEMENT

(30) Priorität: 01.09.2017 DE 102017008254
(43) Veröffentlichungstag der Anmeldung: 06.03.2019
(73) Patentinhaber: Westinghouse Electric Germany GmbH, 68167 Mannheim (DE)
(72) Erfinder: Sassen, Felix, 68163 Mannheim (DE); Seitz, Jochen, 68219 Mannheim (DE); Pérez-Salado Kamps, Álvaro, 67661 Kaiserslautern (DE); Hartmann, Christoph, 76297 Stutensee (DE); Kostov, Emil, 1373 Sofia (BG); Vujic, Zoran, 69123 Heidelberg (DE)
(74) Vertreter: Eickmeyer, Dietmar

(56) Entgegenhaltungen:
- WO-A1-90/08880
- DE-C2- 2 942 937
- JP-A- 2013 096 928
- US-A1- 2013 301 787
- US-A1- 2016 336 083

## Beschreibung

Die Erfindung betrifft ein Sicherheitsbehälterkühlsystem, aufweisend folgende Komponenten: einen abgeschlossenen Sicherheitsbehälter für eine kerntechnische Anlage, einen innerhalb des Sicherheitsbehälters befindlichen Kühlmediumsammelbereich zur Aufnahme eines zu kühlenden Mediums, einen innerhalb des Sicherheitsbehälters befindlichen ersten Wärmetauscher zur Wärmeübertragung zwischen dem zu kühlenden Medium und einem Kühlmittel, erste Mittel, um in einem ersten Kühlkreislauf das zu kühlende Medium dem Kühlmediumsammelbereich zu entnehmen, dem ersten Wärmetauscher zur Kühlung zuzuführen und nach dessen Durchströmung in den Kühlmediumsammelbereich rückzuführen, wobei die ersten Mittel eine erste innerhalb des Sicherheitsbehälters befindliche Pumpvorrichtung aufweisen, um das zu kühlende Medium in Strömung zu versetzen, sowie zweite Mittel, um dem ersten Wärmetauscher ein Kühlmittel von außerhalb des Sicherheitsbehälters zuzuführen und nach dessen Durchströmung nach außerhalb des Sicherheitsbehälters rückzuführen, wobei die zweiten Mittel eine außerhalb des Sicherheitsbehälters befindliche zweite Pumpvorrichtung aufweisen, um das Kühlmittel in Strömung zu versetzen.

Es ist allgemein bekannt, dass in kerntechnischen Anlagen eine Vielzahl an Vorkehrungen zum Schutz der Umwelt vor möglichen Schäden bei einem eventuellen Störfall getroffen werden. Ein Störfall kann mit einer erhöhten Temperaturentwicklung innerhalb eines Kernreaktors einhergehen, wenn die vorgesehenen Kernreaktor-Sicherheitskühlsysteme ausfallen. In solchen Fällen wird die reaktorseitig erzeugte Wärmeenergie, beispielsweise die Nachzerfallsleistung, nicht in genügendem Maße abgeführt und es kann zu einer Überhitzung des Kernreaktors kommen.

Um auch im Störfall ein Höchstmaß an Sicherheit zu gewährleisten, ist ein Kernreaktor von einem hermetisch geschlossenen Sicherheitsbehälter beziehungsweise einem Containment / Confinement umgeben, wodurch im Falle eines Störfalls die möglicherweise aus dem Reaktorkern entweichenden radioaktiven Stoffe nicht in die Umgebung austreten können, sondern vielmehr in dem Sicherheitsbehälter zurückgehalten werden. Innerhalb eines Sicherheitsbehälters ist zumeist ein Kühlmediumsammelbereich oder ein sogenannter Reaktorsumpf vorgesehen, in welchem bei einem eventuellen Störfall beispielsweise aus einem leckenden Kühlsystem austretendes radioaktiv kontaminiertes Kühlwasser gesammelt, bedarfsweise gekühlt und dem Kühlsystem beziehungsweise dem Reaktorkern oder anderen Systemen wieder zugeführt wird. Es existieren auch Schutzkonzepte, bei welchen ein Kernreaktor in einem Kühlmediumsammelbereich angeordnet ist, welcher im Störfall mit Kühlwasser geflutet wird, um eine erhöhte Kühlung zu erzielen, wobei auch hier das sich im Kühlmediumsammelbereich ansammelnde radioaktiv kontaminierte Kühlwasser gekühlt werden muss.

In einem Störfall muss die dann durch den Kernreaktor oder eine sonstige Wärmequelle in dem Sicherheitsbehälter beziehungsweise in dessen Kühlmediumsammelbereich in Form von erhitztem zu kühlenden Medium anfallende Wärmeenergie nach außerhalb geführt werden. Wenn dies nicht geschieht, könnte durch eine vermehrte Bildung von Wasserdampf ein gefährlicher Überdruck im Sicherheitsbehälter entstehen, welcher bei Übersteigen eines kritischen Niveaus direkt aus dem Sicherheitsbehälter in die Umgebung abgelassen werden müsste wenn ein Versagen des Sicherheitsbehälters vermieden werden soll.

Zur Gewährleistung einer hinreichenden Kühlung sind entsprechende Kühlsysteme vorgesehen, welche typischerweise einen Wärmetauscher aufweisen, durch welchen sichergestellt wird, dass radioaktiv kontaminierte Stoffe innerhalb des Sicherheitsbehälters verbleiben und nicht an die Umgebung abgegeben werden. Ein solcher Wärmetauscher wird primärseitig in einem Kühlkreislauf von dem erhitzten zu kühlenden Medium durchflossen, in einem Störfall also typischerweise von radioaktiv kontaminiertem Wasser. Die Sekundärseite eines derartigen Wärmetauschers wird von einem Kühlmittel durchflossen, welches Wärmeenergie von dem erhitzten zu kühlenden Medium aufnimmt und dieses damit kühlt, mit diesem aber nicht in direkten Kontakt tritt, so dass es auch nicht dadurch kontaminiert wird. Das nicht kontaminierte Kühlmittel gibt seinerseits die von ihm aufgenommene Wärmeenergie an eine Wärmesenke außerhalb des Sicherheitsbehälters ab.

Je nach Art des Störfalls müssen derartige Kühlsysteme sehr leistungsfähig und in der Lage sein, auch über einen langen Zeitraum größere Wärmemengen aus dem Kühlmediumsammelbereich eines Sicherheitsbehälters nach außerhalb zu transportieren. Hierzu ist es gemäß dem Stand der Technik üblich, mittels elektromotorbetriebener Pumpen einen Strom des zu kühlenden Mediums durch den Kühlkreislauf zu erzwingen. Dies führt zu einem erhöhten Wärmedurchsatz des Wärmetauschers und damit zu einer erhöhten Kühlwirkung. Hierbei sind die Elektromotoren für die Pumpen innerhalb des Sicherheitsbehälters angeordnet.

Nachteilig an diesem Stand der Technik ist, dass gerade in einem Störfall der Betrieb von aktiven Antriebsvorrichtungen wie Motoren innerhalb des Sicherheitsbehälters aufgrund der in einem Störfall herrschenden Bedingungen wie erhöhter Temperatur und einer Atmosphäre mit radioaktiv kontaminiertem Wasserdampf mit einer erhöhten Unsicherheit verbunden sein kann. Dies widerspricht dem Sicherheitsbestreben, gerade in einem Störfall ein Höchstmaß an Zuverlässigkeit des Sicherheitsbehälterkühlsystems vorzuhalten.

Das Patentdokument DE 10 2011 107470 A1 offenbart ein Kernreaktorkühlsystem, aufweisend einen Reaktordruckbehälter, welcher seinerseits innerhalb eines von einer ersten Schutzwandung umgebenen ersten räumlichen Bereiches angeordnet ist sowie einen auf ähnlicher geodätischen Höhe zum ersten Bereich angeordneten zweiten von einer zweiten Schutzwandung umgebenen räumlichen Bereich, der dafür vorgesehen ist, aus einem primären mit dem Reaktordruckbehälter zusammenwirkenden Kühlsystem austretendes Kühlwasser zu sammeln. Das Kernreaktorkühlsystem weist Mittel auf, in einem Notfall den ersten räumlichen Bereich mit gekühltem Kühlwasser zu fluten.

Das Patentdokument US 2016/336083 A1 offenbart ein weiteres Kühlsystem.

Ausgehend von diesem Stand der Technik ist es Aufgabe der Erfindung, ein leistungsfähiges Sicherheitsbehälterkühlsystem nach dem Oberbegriff des Anspruchs 1 mit einer erhöhten Zuverlässigkeit bereitzustellen.

Diese Aufgabe wird gelöst durch ein Sicherheitsbehälterkühlsystem der eingangs genannten Art. Hierbei weisen die zweiten Mittel eine innerhalb des Sicherheitsbehälters befindliche Turbine auf, welche durch die Strömung des Kühlmittels angetrieben wird wobei die erste Pumpvorrichtung derart mit der Turbine gekoppelt ist, dass sie durch diese angetrieben wird. Das Sicherheitsbehälterkühlsystem ist daurch gekennzeichnet, dass die Turbine und die erste Pumpvorrichtung innerhalb des Kühlmediumsammelbereiches und unterhalb der Oberfläche des zu kühlenden Mediums angeordnet sind.

Die Grundidee der Erfindung besteht darin, die Strömung des Kühlmittels, welches über die zweiten Mittel von außerhalb des Sicherheitsbehälters durch den in diesem befindlichen ersten Wärmetauscher hinein und wieder herausgeführt wird, zu nutzen, um eine innerhalb des Sicherheitsbehälters befindliche Turbine anzutreiben, welche ihrerseits die erste Pumpvorrichtung für den ersten Kühlkreislauf antreibt. Somit wird das zu kühlende Medium im ersten Kühlkreislauf indirekt durch einen außerhalb des Sicherheitsbehälters angeordneten Elektromotor oder eine sonstige Antriebsvorrichtung der zweiten Pumpvorrichtung in Strömung versetzt. Dadurch ist ein aktiver Motor wie beispielsweise ein Verbrennungs- oder Elektromotor innerhalb des Sicherheitsbehälters in vorteilhafter Weise vermieden und die Zuverlässigkeit des Kühlsystems dadurch insbesondere in einem Störfall gesteigert. Außerhalb des Sicherheitsbehälters herrschen nämlich auch im Störfall keine derartigen Bedingungen, dass mit einem erhöhten Ausfallrisiko von Motoren oder dergleichen zu rechnen wäre.

Das in den Sicherheitsbehälter hinein und wieder herausgeführte Kühlmittel - beispielsweise Wasser - erfüllt hierbei neben seiner originären Funktion als Wärmetauschermedium eine weitere Funktion als Hydraulikmedium zum Antreiben der Turbine. Es ist aber durchaus auch möglich, ein gasförmiges Kühlmittel zu verwenden. Auch ein solches ist gleichzeitig sowohl als Kühl- als auch Hydraulik- beziehungsweise Antriebsmedium für die Turbine geeignet. Innerhalb des Sicherheitsbehälters ist das Kühlmittel vorzugsweise in einem geschlossenen Rohrsystem geführt, um jeden direkten Kontakt mit innerhalb des Sicherheitsbehälters befindlichen flüssigen oder gasförmigen gegebenenfalls kontaminierten Stoffen auszuschließen. Um das in das von außerhalb des Sicherheitsbehälters durch die zweiten Mittel zum ersten Wärmetauscher geführte Medium in eine derartige Strömung zu versetzen, dass damit die Turbine angetrieben werden kann, ist erfindungsgemäß außerhalb des Sicherheitsbehälters eine zweite Pumpvorrichtung vorgesehen, welche beispielsweise durch einen ebenfalls außerhalb befindlichen Verbrennungs- oder Elektromotor angetrieben ist.

Der erste von der ersten Pumpvorrichtung angetriebene Kühlkreislauf umfasst neben dieser und dem ersten Wärmetauscher insbesondere auch Rohrleitungen, in welchen das zu kühlende Medium aus dem Kühlmediumsammelbereich des Sicherheitsbehälters zum Wärmetauscher und wieder rückgeführt wird. Der erste Wärmetauscher weist eine Primärseite auf, welche von dem zu kühlenden Medium durchflossen wird, und eine Sekundärseite, welche von dem Kühlmittel durchflossen wird. Die Primärseite ist somit direkt Teil des ersten Kühlkreislaufs.

Die Rückführung des gekühlten Mediums kann sowohl über eine im Kühlmediumsammelbereich mündende Rückführleitung erfolgen, es können aber auch beispielsweise Zerrieselungs- oder Sprühvorrichtungen vorgesehen sein, mit welchen das gekühlte Medium in den atmosphärischen Bereich des Sicherheitsbehälters verteilt wird. Derartige Zerrieselungs- oder Sprühvorrichtungen sind idealerweise ohne einen eigenen Antrieb ausgestaltet und arbeiten nur über den Druck des zu kühlenden Mediums, welcher durch die erste Pumpvorrichtung aufgebaut wird.

Die erste Pumpvorrichtung und die diese antreibende Turbine sind zur Übertragung der Antriebskräfte mechanisch miteinander gekoppelt. Hierbei sind vielfältige Möglichkeiten denkbar. Pumpvorrichtung und Turbine können beispielsweise auf ein und derselben Antriebswelle angeordnet sein und durch diese mechanisch gekoppelt oder aber auch auf separaten Antriebswellen angeordnet und über ein Getriebe gekoppelt sein. Es ist aber auch eine Hydraulikflüssigkeit denkbar, welche in einem geschlossenen Kreislauf zwischen Pumpvorrichtung und Turbine fließt. Der Massestrom durch den ersten Kühlkreislauf ist erfindungsgemäß in einer direkten Abhängigkeit zum Massenstrom des Kühlmittels. Dies ist insoweit von Vorteil, als zur Erhöhung der Wärmeübertragung des ersten Wärmetauschers idealerweise sowohl dessen Primär- als auch Sekundärseite in erhöhtem Maße von zu kühlendem Medium beziehungsweise Kühlmittel durchströmt werden sollten.

Das erfindungsgemäße Sicherheitsbehälterkühlsystem zeichnet sich neben der Vermeidung einer Antriebsvorrichtung beziehungsweise eines Elektromotors für den ersten Kühlkreislauf innerhalb des Sicherheitsbehälters auch durch besonders wenig verwendete Komponenten aus, wodurch die Zuverlässigkeit weiter gesteigert wird. Weiterhin vorteilhaft ist auch der mit der geringen Anzahl von Komponenten verbundene geringe Raumbedarf. Das Sicherheitsbehälterkühlsystem erlaubt einen stationären Betrieb und damit eine zuverlässige Langzeitkühlung auch bei schweren Reaktorunfällen.

Ein Sicherheitsbehälter kann beispielsweise als Schutzraum für ein Brennelementlagerbecken eines Kernkraftwerkes ausgeführt sein, wobei hier das Brennelementlagerbecken als Kühlmediumsammelbereich anzusehen ist. Ein Sicherheitsbehälter im Sinne dieser Erfindung ist daher nicht zwangsläufig als Sicherheitsbehälter für einen Kernreaktor anzusehen.

Gemäß einer weiteren Ausgestaltungsform der Erfindung ist der Sicherheitsbehälter jedoch ein hermetisch abgeschlossener Sicherheitsbehälter für einen Kernreaktor, welcher beispielsweise als Containment aus Beton oder Stahl ausgeführt ist.

Gemäß einer bevorzugten Ausgestaltungsvariante des erfindungsgemäßen Sicherheitsbehälterkühlsystems ist das zu kühlende Medium und/oder das Kühlmittel Wasser. Wasser zeichnet sich durch eine hohe Wärmekapazität aus und ist im technischen Gebiet der Kühlung von Kernreaktoren weit verbreitet.

Entsprechend einer weiteren Variante des Sicherheitsbehälterkühlsystems ist der erste Wärmetauscher ein Plattenwärmetauscher. Derartige Wärmetauscher weisen durch alternierende Anordnung von plattenähnlichen Elementen von deren Primär- und Sekundärseite eine besonders hohe Wärmeübertragungsfläche sowie primär- und sekundärseitig besonders ausgeprägte turbulente Strömungen und damit einen besonders hohen Wirkungsgrad auf, welcher gegebenenfalls auch eine reduzierte Baugröße ermöglicht.

Entsprechend einer weiteren Variante des Sicherheitsbehälterkühlsystems umfassen die ersten Mittel des ersten Kühlkreislaufs eine Zerrieselungs- oder Sprühvorrichtung für das gekühlte Medium, was in diesem Fall idealerweise eine Flüssigkeit wie Wasser ist. Hierdurch wird ein Erwärmen des flüssigen zerstäubten Mediums beziehungsweise des Wassers und/oder ein Übergang dieses Mediums in den gasförmigen Zustand erleichtert und eine zusätzliche Kühlwirkung des atmosphärischen Bereiches des Sicherheitsbehälters erzielt.

Gemäß einer weiteren Variante des Sicherheitsbehälterkühlsystems wird die zweite Pumpvorrichtung durch einen Elektromotor oder einen Verbrennungsmotor angetrieben, welche erfindungsgemäß jeweils außerhalb des Sicherheitsbehälters angeordnet sind. Derartige Motoren haben sich als Antriebe bewährt und können zur weiteren Steigerung der Zuverlässigkeit des Sicherheitsbehälterkühlsystems auch redundant beziehungsweise diversitär ausgeführt werden. Ein Verbrennungsmotor bietet zudem den Vorteil einer Unabhängigkeit von der Stromversorgung, welche im Störfall im Extremfall auch nicht zwangsläufig sichergestellt ist. Gegebenenfalls lassen sich im Störfall durch mobile Geräte zusätzliche Motorleistungen installieren.

Entsprechend einer weiteren erfindungsgemäßen Variante des Sicherheitsbehälterkühlsystems ist außerhalb des Sicherheitsbehälters ein zweiter Wärmetauscher vorgesehen und das Kühlmittel in einem zweiten vorzugsweise geschlossenen Kühlkreislauf durch diesen geführt. Dadurch erfolgt eine Ableitung der aufgenommenen Wärmeenergie an die Umgebung, die in diesem Fall eine Wärmesenke aufweist. Durch diesen geschlossenen zweiten Kühlkreislauf ist die Wahrscheinlichkeit, dass kein radioaktiv kontaminiertes Material aus dem Sicherheitsbehälter an die Umgebung abgegeben wird, in vorteilhafter Weise erhöht. Selbst für den Fall, dass beispielsweise über ein Leck des ersten Wärmetauschers radioaktiv kontaminiertes Material von dessen Primärseite auf dessen Sekundärseite übertragen wird, wird dieses nicht an die Umgebung abgegeben, weil der zweite Kühlkreislauf geschlossen ist und seinerseits seine Wärmeenergie über den zweiten Wärmetauscher an die Umgebung abgibt. Wie der erste Wärmetauscher weist auch der zweite Wärmetauscher eine Primär- und eine Sekundärseite auf, wobei das Kühlmittel des zweiten Kühlkreislaufs durch dessen Primärseite fließt.

Zur Kühlung des primärseitig durch den zweiten Wärmetauscher fließenden Kühlmittels ist sekundärseitig ein weiteres Kühlmittel durch den zweiten Wärmetauscher geführt, mittels welchem dann eine Ableitung der aufgenommenen Wärmeenergie an die Umgebung erfolgt, die in diesem Fall eine Wärmesenke aufweist. Erfindungsgemäß werden als weiteres Kühlmittel bevorzugt Wasser oder Luft verwendet. Wasser kann beispielsweise über entsprechende Pumpen einem naheliegenden Gewässer oder Fluss entnommen werden und nach Durchlauf durch die Sekundärseite des zweiten Wärmetauschers wieder in erwärmter Form dorthin rückgeführt werden. Luft als weiteres Kühlmittel kann über entsprechende Gebläse durch die Sekundärseite des zweiten Wärmetauschers geblasen und dort erwärmt werden. In beiden Fällen fungiert das Wasser beziehungsweise die Luft der Umgebung als Wärmesenke. Auch Kühltürme sind geeignete Wärmesenken beziehungsweise als zweite Wärmetauscher geeignet.

Gemäß einer weiteren Variante des Sicherheitsbehälterkühlsystems sind die Turbine und die erste Pumpvorrichtung hydraulisch miteinander gekoppelt. Die Turbine kann beispielsweise eine Propellerturbine sein, welche im Strömungsbereich des Kühlmittels beispielsweise in oder an einer entsprechenden Rohrleitung angeordnet ist. Durch die Turbine wird bei hydraulischer Kopplung eine Pumpe für eine Hydraulikflüssigkeit angetrieben, welche in einem geschlossenen Kreislauf mit einer hydraulischen Antriebsvorrichtung verbunden ist, welche ihrerseits wieder die erste Pumpvorrichtung antreibt. Bei hydraulischer Kopplung müssen Turbine und erste Pumpvorrichtung nicht zwangsläufig in unmittelbarer Nähe zueinander angeordnet sein, wie es beispielsweise bei einer Kopplung über eine gemeinsame Antriebswelle der Fall wäre. Eine hydraulische Kopplung zeichnet sich durch ihre hohe Zuverlässigkeit aus.

Erfindungsgemäß sind die Turbine und die erste Pumpvorrichtung innerhalb des Kühlmediumsammelbereiches und unterhalb der Oberfläche des zu kühlenden Mediums angeordnet. Hierdurch ist die Zuverlässigkeit im Vergleich zu einer außerhalb des zu kühlenden Mediums befindlichen Anordnung gesteigert, insbesondere beim Anpumpen des ersten Kühlkreislaufes, wo Teile der Zuleitungen aus dem Kühlmediumsammelbereich zum ersten Wärmetauscher beziehungsweise die erste Pumpvorrichtung selbst gegebenenfalls noch mit Luft gefüllt sein könnten. Ebenso wird dadurch die Wahrscheinlichkeit deutlich reduziert, dass in der ersten Pumpvorrichtung Kavitation auftritt, insbesondere dann, wenn zu Beginn des Pumpenbetriebs unter Störfallbedingungen das zu kühlende Medium in der Nähe des Sättigungszustandes vorliegt.

Entsprechend sind die Turbine und die erste Pumpvorrichtung innerhalb des Beckenbereiches angeordnet, wobei die Ansaugöffnung für die erste Pumpvorrichtung (ohne Berücksichtigung weiterer angeschlossener Rohrleitungen) unterhalb der Oberfläche des zu kühlenden Mediums angeordnet ist. Eine derartige Variante wird auch als Tauchpumpe oder "Submersible Pump" bezeichnet.
Gemäß einer weiteren erfindungsgemäßen Variante des Sicherheitsbehälterkühlsystems sind die Turbine und die erste Pumpvorrichtung in Form einer einzigen Komponente, einer sogenannten Turbotauchpumpe ("Water Turbine Driven Submersible Pump"), ausgeführt. Diese zeichnet sich durch eine besonders hohe Zuverlässigkeit aus.
Weitere vorteilhafte Ausgestaltungsmöglichkeiten sind den weiteren abhängigen Ansprüchen zu entnehmen.
Anhand der in den Zeichnungen dargestellten Ausführungsbeispiele sollen die Erfindung, weitere Ausführungsformen und weitere Vorteile näher beschrieben werden. Es zeigen
- Fig. 1: ein exemplarisches erstes Sicherheitsbehälterkühlsystem sowie
- Fig. 2: ein exemplarisches zweites Sicherheitsbehälterkühlsystem.

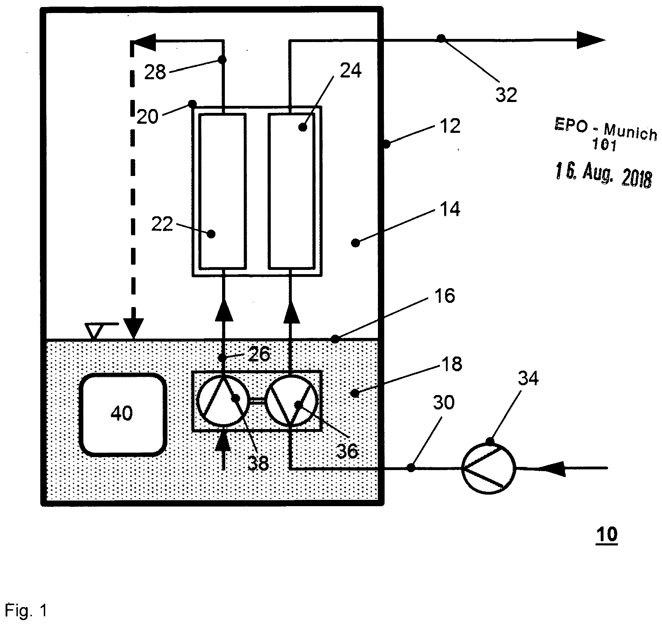

Figur 1 zeigt in einer Prinzipskizze ein exemplarisches erstes Sicherheitsbehälterkühlsystem 10. Ein Sicherheitsbehälter 12, in diesem Fall ein Containment / Confinement aus Beton oder Stahl für einen Kernreaktor, umschließt einen atmosphärischen Bereich 14 und einen Kühlmediumsammelbereich 18, beispielsweise einen Reaktorsumpf. Der Kühlmediumsammelbereich 18 ist mit einem zu kühlenden Medium 16 gefüllt, in diesem Fall mit Kühlwasser, dessen Oberfläche in der Figur mit einer Linie angedeutet ist. Das zu kühlende Medium wird von einer Wärmequelle 40 erhitzt, in diesem Beispiel ein zumindest teilweise im Kühlmediumsammelbereich 18 befindlicher Kernreaktor, welcher im konkreten Störfall seine Nachzerfallsleistung an das zu kühlende Medium 16 abgibt.

Das zu kühlende Medium 16 wird in einem ersten Kühlkreislauf durch die Primärseite 22 eines oberhalb des Kühlmediumsammelbereiches 18 befindlichen ersten Wärmetauschers 20 geführt. Unterhalb der Oberfläche des zu kühlenden Mediums 16 ist im Kühlmediumsammelbereich 18 eine erste Pumpvorrichtung 38 angeordnet, welche über eine Leitung 26 das zu kühlende Medium von unten in die Primärseite 22 des ersten Wärmetauschers 20 hineindrückt. Dort wird das Medium gekühlt und tritt wieder über eine Leitung 28 als gekühltes Medium wieder aus. Die Leitung 28 kann entweder direkt in den Kühlmediumsammelbereich rückgeführt sein ,in der Zeichnung ist jedoch angedeutet, dass die Leitung 28 im atmosphärischen Bereich 14 endet und das Medium 16 über nicht gezeigte Zerrieselungs- oder Sprühvorrichtungen verteilt wird und dann wieder im Kühlmediumsammelbereich 18 gesammelt wird.

Die Sekundärseite 24 des Wärmetauschers 20 wird von einem Kühlmittel durchflossen, welches über eine zweite Pumpvorrichtung 34 durch eine Leitung 30 von außerhalb des Sicherheitsbehälters 12 zugeführt wird. Die zweite Pumpvorrichtung 34 versetzt das Kühlmittel derart in Strömung, dass eine in der Leitung 30 angeordnete Turbine 36 dadurch angetrieben wird. Die erste Pumpvorrichtung 38 ist derart mit der Turbine 36 gekoppelt, dass sie durch diese angetrieben wird. In diesem Fall sind die erste Pumpvorrichtung 38 und die Turbine 36 durch eine gemeinsame Drehwelle mechanisch miteinander gekoppelt. Somit wird das zu kühlende Medium im ersten Kühlkreislauf indirekt durch einen außerhalb des Sicherheitsbehälters 12 angeordneten Motor oder eine sonstige Antriebsvorrichtung der zweiten Pumpvorrichtung 34 in Strömung versetzt. Dadurch ist ein aktiver Elektromotor wie beispielsweise ein Verbrennungs- oder Elektromotor zum Antrieb der ersten Pumpvorrichtung 38 innerhalb des Sicherheitsbehälters 12 in vorteilhafter Weise vermieden.

Nach Durchströmen der Sekundärseite 24 des Wärmetauschers 20 wird das dann erwärmte Kühlmittel über eine Leitung 32 nach außerhalb des Sicherheitsbehälters 12 geführt, wo die Wärmeenergie dann an eine beliebig geartete Wärmesenke abgegeben wird.

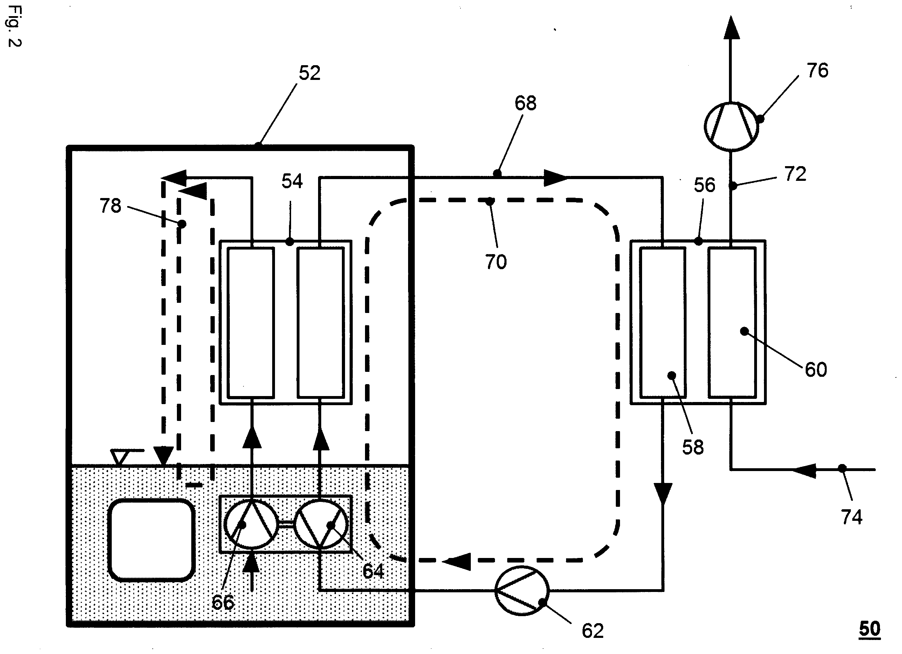

Figur 2 zeigt in einer Prinzipskizze ein exemplarisches zweites Sicherheitsbehälterkühlsystem 50. Dieses beinhaltet die wesentlichen Komponenten des zuvor in Fig. 1 dargestellten Sicherheitsbehälterkühlsystems, nämlich einen Sicherheitsbehälter 52, einen ersten Wärmetauscher 54 und eine erste Pumpvorrichtung 66, welche zu einem ersten Kühlkreislauf 78 für zu kühlendes Medium verschaltet sind.

Die erste Pumpvorrichtung 66 wird durch eine mittels einer Drehwelle gekoppelten Turbine 64 angetrieben, welche ihrerseits in einem geschlossenen zweiten Kühlkreislauf 70 für Kühlmittel angeordnet ist und durch dessen Strömung angetrieben wird. Dieser geschlossene zweite Kühlkreislauf 70 umfasst fernerhin den ersten Wärmetauscher 54, eine zweite außerhalb des Sicherheitsbehälters 52 befindliche zweite Pumpvorrichtung 62, einen ebenfalls außerhalb des Sicherheitsbehälters befindlichen zweiten Wärmetauscher 56 mit seiner Primärseite 58 sowie Leitungen 68. Dadurch dass das Kühlmittel nunmehr in einem geschlossenen zweiten Kühlkreislauf 70 fließt, ist selbst bei einer Leckage zwischen erstem 78 und zweitem 70 Kühlkreislauf gewährleistet, dass kein kontaminiertes zu kühlendes Medium an die Umgebung abgegeben wird.

Zur Kühlung des primärseitig 58 durch den zweiten Wärmetauscher 56 fließenden Kühlmittels ist auf dessen Sekundärseite 60 ein weiteres Kühlmittel durch diesen geführt, mittels welchem dann eine Ableitung der aufgenommenen Wärmeenergie an die Umgebung erfolgt. In diesem Beispiel wird die Sekundärseite 60 des zweiten Wärmetauschers von Umgebungsluft durchströmt, welche über entsprechende Leitungen 72, 74 geführt ist und über ein Gebläse 76 angesaugt wird. Es ist aber auch jeder andere Wärmetauscher oder jede andere Wärmesenke für diesen Zweck denkbar, beispielsweise ein Kühlturm oder ein Gewässer.

### Bezugszeichenliste

- 10: exemplarisches erstes Sicherheitsbehälterkühlsystem
- 12: Sicherheitsbehälter
- 14: atmosphärischer Bereich in Sicherheitsbehälter
- 16: zu kühlendes Medium (Oberfläche)
- 18: Kühlmediumsammelbereich in Sicherheitsbehälter
- 20: erster Wärmetauscher
- 22: Primärseite von erstem Wärmetauscher
- 24: Sekundärseite von erstem Wärmetauscher
- 26: Leitung für zu kühlendes Medium
- 28: Leitung für gekühltes Medium
- 30: Leitung für Kühlmittel
- 32: Leitung für Kühlmittel
- 34: zweite Pumpvorrichtung
- 36: Turbine
- 38: erste Pumpvorrichtung
- 40: Wärmequelle
- 50: exemplarisches zweites Sicherheitsbehälterkühlsystem
- 52: Sicherheitsbehälter
- 54: erster Wärmetauscher
- 56: zweiter Wärmetauscher
- 58: Primärseite von zweiten Wärmetauscher
- 60: Sekundärseite von zweiten Wärmetauscher
- 62: zweite Pumpvorrichtung
- 64: Turbine
- 66: erste Pumpvorrichtung
- 68: Leitung für Kühlmittel
- 70: zweiter Kühlkreislauf
- 72: Leitung für weiteres Kühlmittel (Luft)
- 74: Leitung für weiteres Kühlmittel (Luft)
- 76: Gebläse
- 78: erster Kühlkreislauf

## Patentansprüche

1. Sicherheitsbehälterkühlsystem (10, 50), aufweisend folgende Komponenten:
• einen abgeschlossenen Sicherheitsbehälter (12, 52) für eine kerntechnische Anlage,
• einen innerhalb des Sicherheitsbehälters (12, 52) befindlichen Kühlmediumsammelbereich (18) zur Aufnahme eines zu kühlenden Mediums (16),
• einen innerhalb des Sicherheitsbehälters (12, 52) befindlichen ersten Wärmetauscher (20, 54) zur Wärmeübertragung zwischen dem zu kühlenden Medium (16) und einem Kühlmittel,
• erste Mittel, um in einem ersten Kühlkreislauf (78) das zu kühlende Medium (16) dem Kühlmediumsammelbereich (18) zu entnehmen, dem ersten Wärmetauscher (20, 54) zur Kühlung zuzuführen und nach dessen Durchströmung in den Kühlmediumsammelbereich (18) rückzuführen, wobei die ersten Mittel eine erste innerhalb des Sicherheitsbehälters (12, 52) befindliche Pumpvorrichtung (38, 66) aufweisen, um das zu kühlende Medium (16) in Strömung zu versetzen,
• zweite Mittel, um dem ersten Wärmetauscher (20, 54) das Kühlmittel von außerhalb des Sicherheitsbehälters zuzuführen und nach dessen Durchströmung nach außerhalb des Sicherheitsbehälters (12, 52) rückzuführen, wobei die zweiten Mittel eine außerhalb des Sicherheitsbehälters (12, 52) befindliche zweite Pumpvorrichtung (34, 62) aufweisen, um das Kühlmittel in Strömung zu versetzen, wobei die zweiten Mittel eine innerhalb des Sicherheitsbehälters (12, 52) befindliche Turbine (36, 64) aufweisen, welche durch die Strömung des Kühlmittels angetrieben wird und die erste Pumpvorrichtung (38, 66) derart mit der Turbine (36, 64) gekoppelt ist, dass sie durch diese angetrieben wird,
**dadurch gekennzeichnet,**
• **dass** die Turbine (36, 64) und die erste Pumpvorrichtung (38, 66) innerhalb des Kühlmediumsammelbereiches und im Betrieb unterhalb der Oberfläche des zu kühlenden Mediums (16) angeordnet sind.

2. Sicherheitsbehälterkühlsystem nach Anspruch 1, **dadurch gekennzeichnet, dass** der Sicherheitsbehälter (12, 52) ein hermetisch abgeschlossener Sicherheitsbehälter für einen Kernreaktor ist.

3. Sicherheitsbehälterkühlsystem nach Anspruch 1 oder 2, **dadurch gekennzeichnet, dass** das zu kühlende Medium (16) und/oder das Kühlmittel Wasser ist.

4. Sicherheitsbehälterkühlsystem nach einem der vorherigen Ansprüche, **dadurch gekennzeichnet, dass** der erste Wärmetauscher (20, 54) ein Plattenwärmetauscher ist.

5. Sicherheitsbehälterkühlsystem nach einem der vorherigen Ansprüche, **dadurch gekennzeichnet, dass** die ersten Mittel eine Vernebelungseinrichtung für das gekühlte Medium umfassen.

6. Sicherheitsbehälterkühlsystem nach einem der vorherigen Ansprüche, **dadurch gekennzeichnet, dass** die zweite Pumpvorrichtung (34, 62) durch einen Elektromotor oder einen Verbrennungsmotor angetrieben wird.

7. Sicherheitsbehälterkühlsystem nach einem der vorherigen Ansprüche, **dadurch gekennzeichnet, dass** außerhalb des Sicherheitsbehälters (12, 52) ein zweiter Wärmetauscher (56) vorgesehen ist und dass das Kühlmittel in einem zweiten Kühlkreislauf (70) durch diesen geführt ist.

8. Sicherheitsbehälterkühlsystem nach Anspruch 7 **dadurch gekennzeichnet, dass** zur Kühlung des Kühlmittels ein weiteres Kühlmittel durch den zweiten Wärmetauscher (56) geführt ist.

9. Sicherheitsbehälterkühlsystem nach Anspruch 8, **dadurch gekennzeichnet, dass** das weitere Kühlmittel Wasser oder Luft ist.

10. Sicherheitsbehälterkühlsystem nach einem der vorherigen Ansprüche, **dadurch gekennzeichnet, dass** die Turbine (36, 64) und die erste Pumpvorrichtung (38, 66) hydraulisch miteinander gekoppelt sind.

## Claims

1. Containment vessel cooling system (10, 50) having the following components:
• a sealed containment vessel (12, 52) for a nuclear installation,
• a cooling medium-collecting region (18) situated within the containment vessel (12, 52) and serving for receiving a medium to be cooled (16),
• a first heat exchanger (20, 54) situated within the containment vessel (12, 52) and serving for the exchange of heat between the medium to be cooled (16) and a coolant,
• first means for extracting the medium to be cooled (16) from the cooling medium-collecting region (18), supplying said medium to the first heat exchanger (20, 54) for the purpose of cooling, and, after it has flowed through the latter, returning said medium to the cooling medium-collecting region (18), in a first cooling circuit (78), wherein the first means have a first pump apparatus (38, 66), situated within the containment vessel (12, 52), in order for the medium to be cooled (16) to be made to flow,
• second means for supplying the coolant from outside the containment vessel to the first heat exchanger (20, 54), and, after it has flowed through the latter, returning said coolant to outside the containment vessel (12, 52), wherein the second means have a second pump apparatus (34, 62), situated outside the containment vessel (12, 52), in order for the coolant to be made to flow,
wherein
the second means have a turbine (36, 64) which is situated within the containment vessel (12, 52) and which is driven by the flow of the coolant, and
the first pump apparatus (38, 66) is coupled to the turbine (36, 64) so as to be driven by the latter,
**characterized**
• **in that** the turbine (36, 64) and the first pump apparatus (38, 66) are arranged within the cooling medium-collecting region and, during operation, below the surface of the medium to be cooled (16).

2. Containment vessel cooling system according to Claim 1, **characterized in that** the containment vessel (12, 52) is a hermetically sealed containment vessel for a nuclear reactor.

3. Containment vessel cooling system according to Claim 1 or 2, **characterized in that** the medium to be cooled (16) and/or the coolant are/is water.

4. Containment vessel cooling system according to one of the preceding claims, **characterized in that** the first heat exchanger (20, 54) is a plate-type heat exchanger.

5. Containment vessel cooling system according to one of the preceding claims, **characterized in that** the first means comprise a nebulization device for the cooled medium.

6. Containment vessel cooling system according to one of the preceding claims, **characterized in that** the second pump apparatus (34, 62) is driven by an electric motor or an internal combustion engine.

7. Containment vessel cooling system according to one of the preceding claims, **characterized in that** a second heat exchanger (56) is provided outside the containment vessel (12, 52), and **in that** the coolant is conducted through said second heat exchanger in a second cooling circuit (70).

8. Containment vessel cooling system according to Claim 7, **characterized in that**, for the purpose of cooling the coolant, a further coolant is conducted through the second heat exchanger (56).

9. Containment vessel cooling system according to Claim 8, **characterized in that** the further coolant is water or air.

10. Containment vessel cooling system according to one of the preceding claims, **characterized in that** the turbine (36, 64) and the first pump apparatus (38, 66) are hydraulically coupled to one another.

## Revendications

1. Système de refroidissement d'enceinte de confinement (10, 50), comprenant les composants suivants :
• une enceinte de confinement fermée (12, 52) destinée à une installation nucléaire,
• une zone de collecte de milieu de refroidissement (18) située à l'intérieur de l'enceinte de confinement (12, 52) et destinée à recevoir un milieu (16) à refroidir,
• un premier échangeur de chaleur (20, 54) situé à l'intérieur de l'enceinte de confinement (12, 52) et destiné au transfert de chaleur entre le milieu (16) à refroidir et un agent de refroidissement,
• des premiers moyens destinés à retirer le milieu (16) à refroidir de la zone de collecte de milieu de refroidissement (18) dans un premier circuit de refroidissement (78), l'amener au premier échangeur de chaleur (20, 54) pour le refroidir et le ramener dans la zone de collecte de milieu de refroidissement (18) après avoir traversé ledit échangeur de chaleur, les premiers moyens comprenant un premier dispositif de pompage (38, 66) situé à l'intérieur de l'enceinte de confinement (12, 52) et destiné à permettre l'écoulement du milieu (16) à refroidir,
• des deuxièmes moyens destinés à amener l'agent de refroidissement de l'extérieur de l'enceinte de confinement au premier échangeur de chaleur (20, 54) et le ramener à l'extérieur de l'enceinte de confinement (12, 52) après avoir traversé ledit échangeur de chaleur, les deuxièmes moyens comportant un deuxième dispositif de pompage (34, 62) situé à l'extérieur de l'enceinte de confinement (12, 52) et destiné à permettre l'écoulement de l'agent de refroidissement, les deuxièmes moyens comprenant une turbine (36, 64) située à l'intérieur de l'enceinte de confinement (12, 52) et entraînée par l'écoulement de l'agent de refroidissement et le premier dispositif de pompage (38, 66) étant accouplé à la turbine (36, 64) de manière à être entraîné par celle-ci,
**caractérisé en ce que**
• la turbine (36, 64) et le premier dispositif de pompage (38, 66) sont disposés dans la zone de collecte de milieu de refroidissement et en fonctionnement au-dessous de la surface du milieu (16) à refroidir.

2. Système de refroidissement d'enceinte de confinement selon la revendication 1, **caractérisé en ce que** l'enceinte de confinement (12, 52) est une enceinte de confinement fermée hermétiquement qui est destinée à un réacteur nucléaire.

3. Système de refroidissement d'enceinte de confinement selon la revendication 1 ou 2, **caractérisé en ce que** le milieu (16) à refroidir et/ou l'agent de refroidissement sont de l'eau.

4. Système de refroidissement d'enceinte de confinement selon l'une des revendications précédentes, **caractérisé en ce que** le premier échangeur de chaleur (20, 54) est un échangeur de chaleur à plaques.

5. Système de refroidissement d'enceinte de confinement selon l'une des revendications précédentes, **caractérisé en ce que** les premiers moyens comprennent un dispositif de nébulisation du milieu refroidi.

6. Système de refroidissement d'enceinte de confinement selon l'une des revendications précédentes, **caractérisé en ce que** le deuxième dispositif de pompage (34, 62) est entraîné par un moteur électrique ou un moteur à combustion interne.

7. Système de refroidissement d'enceinte de confinement selon l'une des revendications précédentes, **caractérisé en ce qu'**un deuxième échangeur de chaleur (56) est prévu à l'extérieur de l'enceinte de confinement (12, 52) et **en ce que** l'agent de refroidissement est guidé à travers ce deuxième échangeur de chaleur dans un deuxième circuit de refroidissement (70).

8. Système de refroidissement d'enceinte de confinement selon la revendication 7, **caractérisé en ce qu'**un autre agent de refroidissement est guidé à travers le deuxième échangeur de chaleur (56) pour refroidir l'agent de refroidissement.

9. Système de refroidissement d'enceinte de confinement selon la revendication 8, **caractérisé en ce que** l'autre agent de refroidissement est de l'eau ou de l'air.

10. Système de refroidissement d'enceinte de confinement selon l'une des revendications précédentes, **caractérisé en ce que** la turbine (36, 64) et le premier dispositif de pompage (38, 66) sont accouplés hydrauliquement l'un à l'autre.
